# EUROPÄISCHE PATENTSCHRIFT

(11) **EP 1 572 823 B1**
(45) Veröffentlichungstag und Bekanntmachung des Hinweises auf die Patenterteilung: **08.04.2009**
(21) Anmeldenummer: 03810982.3
(22) Anmeldetag: 11.11.2003
(51) Int. Cl.: C09J 7/00, C09J 7/02

(54) **GEGENSTAND MIT ABZUSICHERNDEN INFORMATIONEN UND VERFAHREN ZUR HERSTELLUNG DESSELBEN**
OBJET PROVIDED WITH PROTECTED INFORMATION AND METHOD FOR PRODUCING SAID OBJECT
OBJET DOTE D'INFORMATIONS A PROTEGER ET PROCEDE DE FABRICATION DUDIT OBJET

(30) Priorität: 12.11.2002 DE 10252521
(43) Veröffentlichungstag der Anmeldung: 14.09.2005
(73) Patentinhaber: Giesecke & Devrient GmbH, 81677 München (DE)
(72) Erfinder: BEIER, Horst-Michael, 86163 Augsburg (DE); KOLBER, Lothar, 81369 München (DE); KABITOGLOU, Georgios, 82024 Taufkirchen (DE); RODRIGUEZ, Gabriel, 08440 Cardedeu (ES)
(74) Vertreter: Höhfeld, Jochen
(86) Internationale Anmeldenummer: PCT/EP2003/012591
(87) Internationale Veröffentlichungsnummer: WO 2004/044080

(56) Entgegenhaltungen:
- WO-A-03/044605
- DE-A- 10 109 964
- DE-C- 19 529 728
- DE-U- 20 110 188
- US-A- 5 281 474
- PATENT ABSTRACTS OF JAPAN vol. 0165, no. 10 (M-1328), 21. Oktober 1992 (1992-10-21) & JP 04 189194 A (SHINKOU KAGAKU KOUGIYOU KK; OTHERS: 01), 7. Juli 1992 (1992-07-07)

## Beschreibung

Die Erfindung betrifft einen Gegenstand mit darauf angebrachten, abzusichernden Informationen, wie einer Codierung, Kennung, PIN-Nummer oder dergleichen, und einem Sicherheits-Abdeckaufkleber zur Abdeckung der zu sichernden Informationen. Die Erfindung betrifft ferner ein Verfahren zum Herstellen eines derartigen Gegenstands sowie ein Verfahren zur sicheren Kennzeichnung eines Gegenstands.

Es ist bekannt, Sicherheits-Abdeckaufkleber zur Abdeckung von Geheimnummern, PIN-Nummern oder anderen Kennungen auf Wertdokumenten, wie Bank- oder Kreditkarten, vorbezahlten Telefonkarten und dergleichen, zu verwenden. Die Abdeckaufkleber sind häufig als undurchsichtige Rubbeletiketten ausgebildet, die sich durch Abrubbeln entfernen lassen und dadurch den Blick auf die darunter liegende Information freigeben. Da die Information oft einen erheblichen Wert darstellt, sind bereits zahlreiche Maßnahmen vorgeschlagen worden, um einen Missbrauch durch unbefugte Nutzer zu erschweren, zu verhindern oder einen erfolgten Manipulationsversuch zumindest kenntlich zu machen. Andernfalls könnte beispielsweise der mit der Kennzahl verbundene Wert einer vorbezahlten Telefonkarte von einem unbefugten Nutzer verbraucht, und die Karte dann als nicht erkennbar wertlose Karte weiterverkauft werden.

In der Druckschrift DE 199 62 638 A1 wird ein Folienelement mit einer selbsthaftenden Schicht als Sicherheitsabdeckung von Codierungen, Kennungen oder dergleichen beschrieben, das aus einem Schrumpffolienmaterial, nämlich einer kaltgereckten thermoplastischen Kunststofffolie besteht. Bei dem Versuch, das Folienelement durch Wärmeeinwirkung abzulösen, schrumpft dieses irreversibel und lässt den Manipulationsversuch dadurch deutlich werden.

Die Druckschrift GB 2 355 431 A schlägt zur Sicherung von vorbezahlten Telefonkarten vor, den Zugangscode mit einem Rubbeletikett abzudecken, welches eine transparente Grundschicht und eine Mehrzahl auf der Grundschicht angebrachter, leicht abrubbelbarer, undurchsichtiger Deckschichten aufweist. Die Grundschicht ist mit einer Reihe von Sicherheitsschlitzen versehen, die verhindern, dass die Grundschicht mit den Deckschichten in einem Stück abgelöst werden kann. Vielmehr soll die Grundschicht beim Versuch, das Rubbeletikett abzuheben, entlang der Sicherheits schlitze reißen, so dass das Etikett auseinander fällt und den Manipulationsversuch erkennbar macht.

Aus der DE 101 09 964 A1 ist eine verbessertes Etikett zum Verdecken von Informationen bekannt, mit einer Grundschicht und einer transparenten Zwischenschicht, auf welcher eine Deckschicht angeordnet ist. Die Deckschicht ist durch Abkratzen entfernbar, um die verdeckten Informationen sichtbar zu machen, die zwischen der Grundschicht und der Zwischenschicht angeordnet sind.

Nachteilig an den bekannten Lösungsvorschlägen ist, dass herkömmliche Sicherheitsetiketten immer noch relativ einfach abziehbar sind oder beispielsweise mit einem Skalpell unbeschädigt von dem zu sichernden Gegenstand entfernt werden können. Durch das unbefugte Auslesen der geschützten Kennungen kann ein nicht unerheblicher wirtschaftlicher Schaden entstehen. Darüber hinaus sinken durch erfolgreiche Betrugsversuche die Akzeptanz und das Vertrauen der Benutzer.

Der Erfindung liegt daher die Aufgabe zugrunde, einen Gegenstand mit abzusichernden Informationen der eingangs genannten Art zu schaffen, der eine erhöhte Sicherheit gegenüber Manipulationen aufweist.

Diese Aufgabe wird durch den Gegenstand mit den Merkmalen des Hauptanspruchs gelöst. Ein Verfahren zur Herstellung eines derartigen Gegen genstands und ein Verfahren zur sicheren Kennzeichnung eines Gegenstands sind Gegenstand der nebengeordneten Ansprüche. Weiterbildungen der Erfindung sind Gegenstand der Unteransprüche.

Gemäß der Erfindung ist zwischen dem Gegenstand und den abzusichernden Informationen eine Zusatzschicht angeordnet, deren Adhäsionskraft zu dem Abdeckaufkleber zumindest in Teilbereichen größer ist, als die Adhäsionskraft der Zusatzschicht zu dem Gegenstand. Durch diese Maßnahme wird die Sicherheit gegenüber Manipulationen deutlich erhöht, da die zu sichernde Informationen aufgrund der unterschiedlichen Haftung der Zusatzschicht zu dem Gegenstand und zu dem Abdeckaufkleber beim Abheben des Abdeckaufklebers unsichtbar bleiben beziehungsweise unlesbar gemacht werden. Die erfindungsgemäße Lösung erlaubt darüber hinaus eine sehr kostengünstige Absicherung von Gegenständen, da die zusätzliche Schicht rein drucktechnisch ausgeführt werden kann und damit Gerätschaften benutzt werden können, die bereits bei der Herstellung des Kartenkörpers eingesetzt werden. Zusätzliche technische Einrichtungen und Apparate oder aufwändige Zusatzschritte sind nicht erforderlich.

Die Erfindung beruht somit auf dem Gedanken, zur Erhöhung der Sicherheit nicht oder nicht nur an einer Verbesserung des Aufbaus des Abdeckaufklebers anzusetzen, sondern einen Siegelbruch einer aufgeklebten Abdeckung durch eine zusätzliche Schicht zwischen dem Gegenstand und den zu sichernden Informationen zu erschweren beziehungsweise eine erfolgte Manipulation deutlich sichtbar zu machen.

Die abzusichernden Informationen sind bevorzugt durch ein Tintenstrahlverfahren auf die Zusatzschicht aufgedruckt und sind insbesondere in schwarzer Farbe auf die Zusatzschicht aufgebracht.

Gemäß einer bevorzugten Ausführungsform der Erfindung ist die Zusatzschicht durch eine Farbschicht beliebiger Farbe, bevorzugte eine weiße Farbschicht, gebildet. Aufgrund der zumindest bereichsweise stärkeren Haftung der Zusatz-Farbschicht an dem Abdeckaufkleber bleibt an diesem beim Abheben des Abdeckaufklebers ein Teil oder sogar die gesamte Farbschicht kleben. Die zu sichernden Informationen sind dann unsichtbar oder unlesbar zwischen der Farbschicht und dem Abdeckaufkleber eingeschlossen und für ein unbefugtes Auslesen unzugänglich.

Wird der Abdeckaufkleber nach dem Abheben wieder auf den Gegenstand aufgeklebt, kann die zu sichernde Information eventuell durch Abrubbeln des Aufklebers sichtbar und lesbar werden. Der Gegenstand kann dann trotz des Manipulationsversuchs bestimmungsgemäß gebraucht werden. Da der Siegelbruch dem Unbefugten keine relevanten Informationen zugänglich macht, entsteht durch die weiterbestehende Gebrauchsfähigkeit kein Schaden.

Bei einer teilweisen Ablösung der Zusatzschicht mit dem Abdeckaufkleber ist allerdings ein exaktes, registerhaltiges Aufkleben auf die auf dem Gegenstand verbliebenen Informationsbruchteile nicht möglich. Der Manipulationsversuch wird dann bei Aufrubbeln sichtbar und kann je nach den Umständen reklamiert oder bekannt gegeben werden. Es kann auch der Fall eintreten, dass der abgelöste Abdeckaufkleber bei dem Manipulationsversuch so weit versetzt oder so verdreht aufgeklebt wird, dass die zu sichernden Informationen nach dem Aufrubbeln unleserlich sind. Die unleserliche Information belegt dann den Siegelbruch und die Tatsache, dass der Besitzer nicht von der Information Kenntnis nehmen konnte, so dass eine Reklamation oder Umtausch des Gegenstands problemlos möglich sein sollte.

Nach einer anderen bevorzugten Ausführungsform der Erfindung ist die Zusatzschicht durch eine Mehrlagenschicht gebildet, die zumindest eine Farbschicht und zumindest eine zwischen dem Gegenstand und der Farbschicht angeordnete weitere Farbschicht oder Lackschicht umfasst. Die Lackschicht kann insbesondere durch einen UV-Lack gebildet sein. Diese Aufteilung ermöglicht es, die Farbschicht auf optimale Lichtundurchlässigkeit auszulegen, um zu verhindern, dass der an dem abgelösten Abdeckaufkleber befindliche Informationsteil gelesen werden kann. Unabhängig davon können mithilfe der zusätzlichen Farb- bzw. der Lackschicht die Haftungseigenschaften der Zusatzschicht an dem Gegenstand eingestellt werden. Insgesamt ergeben sich sehr flexible Gestaltungsmöglichkeiten der Zusatzschicht.

In beiden der genannten Ausführungsformen kann die unter den abzusichernden Informationen liegende Farbschicht durch eine einfarbige Farbschicht gebildet sein. Die Farbe dieser Farbschicht kann auf die Farbe der abzusichernden Informationen abgestimmt sein, um einen hohen Kontrast zwischen den abzusichernden Informationen und der darunter liegenden Farbschicht und damit eine gute Lesbarkeit nach dem Abrubbeln des Abdeckaufklebers herzustellen. Gleichzeitig soll die Farbschicht gut decken, so dass die abzusichernden Informationen bei abgelöstem Aufkleber nicht sichtbar oder lesbar sind.

Gemäß einer bevorzugten Weiterbildung der letztgenannten Ausführungsform umfasst die Mehrlagenschicht zusätzlich eine zweite Farbschicht, die zwischen der Lackschicht und der unter den abzusichernden Informationen liegenden ersten Farbschicht angeordnet ist. Diese zweite Farbschicht kann ein unregelmäßiges Muster aufweisen oder kann Blindinformationen enthalten, deren Charakter den abzusichernden Informationen entspricht.

Bei dieser Gestaltung dient die erste Farbschicht im Wesentlichen der guten Lesbarkeit der Informationen nach dem Abrubbeln des Abdeckaufklebers. Die zweite Farbschicht wird dagegen nur beim unbefugten Abheben des Abdeckaufklebers sichtbar und dient der verstärkten Unkenntlichmachung der zu sichernden Informationen. Beispielsweise kann die zweite Farbschicht ein unregelmäßigen Streifen- oder Wellenmuster enthalten. Auch kann eine Blindinformation, etwa eine ungültige Ziffernfolge, den Manipulator über den Erfolg des Siegelbruchs irreführen. Es versteht sich, dass die Art des Musters oder der Charakter der Blindinformation vorteilhaft auf den Charakter und die Art der abzusichernden Informationen abgestimmt wird.

Nach einer bevorzugten Ausführungsform der Erfindung ist die Adhäsionskraft der Zusatzschicht zu dem Abdeckaufkleber größer als die Adhäsionskraft der Zusatzschicht zu dem Gegenstand. Beim Ablösen des Abdeckaufklebers löst sich dann im Wesentlichen die gesamte Zusatzschicht ab und schließt die zu sichernden Informationen zwischen sich und dem Abdeckaufkleber unsichtbar ein.

Alternativ kann vorgesehen sein, dass in ersten Bereichen die Adhäsionskraft der Zusatzschicht zu dem Abdeckaufkleber größer ist als die Adhäsionskraft der Zusatzschicht zu dem Gegenstand und dass in zweiten Bereichen die Adhäsionskraft der Zusatzschicht zu dem Abdeckaufkleber kleiner ist als die Adhäsionskraft der Zusatzschicht zu dem Gegenstand. Beim Ablösen des Abdeckaufklebers bleibt dann der in den ersten Bereichen liegende Informationsanteil an dem Aufkleber hängen, während der in den zweiten Bereichen liegende Informationsanteil auf dem Gegenstand verbleibt. Durch die Separation der beiden Bereiche können die zu sichernden Informationen nach dem Ablösen nicht mehr entziffert werden.

Größe und Gestalt der ersten und zweiten Bereiche sind zweckmäßig derart auf die abzusichernden Informationen abgestimmt, dass diese nach Abheben des Abdeckaufklebers nicht mehr entzifferbar sind. Mit Vorteil bilden die ersten und zweiten Bereiche dabei eine kleinräumige Struktur, so dass die zu sichernden Informationen durch die Ablösung des Abdeckaufklebers in eine Vielzahl kleiner Bereiche aufgeteilt werden. Beispielsweise kann die Strukturgröße bei Ziffern- oder Textfolgen auf die Strichstärke der Buchstaben abgestimmt sein, so dass keine größeren zusammenhängenden Teile einer Ziffer oder eines Buchstabens erkennbar bleiben. Es ist in diesem Zusammenhang ebenfalls bevorzugt, dass die ersten und zweiten Bereiche eine unregelmäßige Struktur bilden. Dies setzt die Lesbarkeit der auf dem Gegenstand verbleibenden Informationsteile weiter herab.

Die Zusatzschicht weist nach einer vorteilhaften Ausführungsform Mittel zur örtlich unterschiedlichen Einstellung der Adhäsionskraft auf. Diese Mittel können einen zwischen den abzusichernden Informationen und dem Gegenstand lokal aufgebrachten Antihaftlack und/oder einen Haftvermittler umfassen. Die Mittel zur örtlich unterschiedlichen Einstellung der Adhäsionskraft sind bevorzugt durch Drucken auf den Gegenstand aufgebracht.

Um eine besonders kostengünstige Absicherung des Gegenstands zu erreichen, ist die Zusatzschicht, gegebenenfalls mit allen ihren Teilschichten, auf den Gegenstand aufgedruckt. Bevorzugt ist die Zusatzschicht im Offset-Verfahren aufgedruckt.

Umfasst die Zusatzschicht Farbschichten, handelt es sich bei den eingesetzten Farben vorzugsweise um Offsetfarben, insbesondere um UV-trocknende Offsetfarben. Die Hauptbestandteile der Offsetfarben sind hierbei üblicherweise Pigmente als Farbmittel, vorpolymerisierte Kunststoffe, wie Acrylharze, als Bindemittel und Fotoinitiatoren.

Die abzusichernden Informationen können insbesondere eine Zeichenfolge, wie eine Geheimzahl oder eine PIN-Nummer, darstellen. Bei dem Gegenstand kann es sich beispielsweise um ein Wertdokument, insbesondere eine Bankkarte, eine Kreditkarte, eine vorbezahlte Wertkarte, wie eine Telefonkarte, oder ein Lotterielos handeln.

Als Abdeckaufkleber kann jedes aus dem Stand der Technik bekannte Klebeetikett verwendet werden. Insbesondere kann der Abdeckaufkleber ein Rubbeletikett darstellen, das üblicherweise zumindest aus einem transparenten Träger und einer abrubbelbaren Deckschicht besteht.

Zur Herstellung eines Gegenstands mit abzusichernden Informationen, wie einer Codierung, Kennung, PIN-Nummer oder dergleichen, wird ein mit den Informationen zu versehender Gegenstand bereitgestellt, auf den Gegenstand eine Zusatzschicht mit einer ersten, gleichmäßigen oder lokal unterschiedlichen Adhäsionskraft zu dem Gegenstand aufgebracht, die zu sichernden Informationen auf die Zusatzschicht aufgebracht, und die zu sichernden Informationen mit einem Sicherheits-Abdeckaufkleber abgedeckt, der eine zweite Adhäsionskraft zu der Zusatzschicht aufweist, wobei die zweite Adhäsionskraft zumindest in Teilbereichen größer ist als die erste Adhäsionskraft der Zusatzschicht zu dem Gegenstand.

Wie weiter oben geschildert, kann als Zusatzschicht eine Farbschicht aufgebracht werden. Alternativ kann zunächst eine Lackschicht auf den Gegenstand aufgebracht werden, die die erste Adhäsionskraft zu dem Gegenstand einstellt, und dann eine Farbschicht auf die Lackschicht aufgebracht werden.

Es kann auch vorgesehen sein, eine weitere Farbschicht mit einer anderen Farbe und/ oder einem anderen Muster auf die vorhandene Farbschicht aufzubringen. Beim Aufbringen der Zusatzschicht können mit Vorteil auch Mittel zur örtlich unterschiedlichen Einstellung der Adhäsionskraft auf den Gegenstand aufgebracht werden, insbesondere kann ein Antihaftlack und/oder ein Haftvermittler lokal auf den Gegenstand aufgebracht werden.

Die Schichten der Zusatzschicht werden zweckmäßig aufgedruckt, bevorzugt im Öffset-Verfahren. Auch werden die abzusichernden Informationen mit Vorteil durch ein Tintenstrahlverfahren auf die Zusatzschicht aufgedrucks.

Die Erfindung umfasst weiter ein Verfahren zur sicheren Kennzeichnung eines Gegenstands, bei dem auf den Gegenstand eine Zusatzschicht mit einer ersten, gleichmäßigen oder lokal unterschiedlichen Adhäsionskraft zu dem Gegenstand aufgebracht wird, auf die Zusatzschicht eine Kennzeichnung aufgebracht wird, und die Kennzeichnung mit einem Sicherheits-Abdeckaufkleber abgedeckt wird, der eine zweite Adhäsionskraft zu der Zusatzschicht aufweist, wobei die zweite Adhäsionskraft zumindest in Teilbereichen größer ist als die erste Adhäsionskraft der Zusatzschicht zu dem Gegenstand. Die Herstellung der Zusatzschicht und das Anbringen der Kennzeichnung können dabei analog zur vorstehend geschilderten Herstellung eines Gegenstands mit abzusichernden Informationen erfolgten.

Weitere Ausführungsbeispiele sowie Vorteile der Erfindung werden nachfolgend anhand der Figuren erläutert. Die in den Figuren gezeigten Proportionen entsprechen nicht unbedingt den in der Realität vorliegenden Verhältnissen und dienen vornehmlich zur Verbesserung der Anschaulichkeit.

Es zeigen:
- Fig.1: eine schematische Darstellung einer Wertkarte mit aufgeklebtem Rubbeletikett nach einem Ausführungsbeispiel der Erfindung, und
- Fig. 2 bis 5: schematische Darstellungen von Wertkarten nach verschiedenen Ausführungsbeispielen der Erfindung, jeweils im Querschnitt.

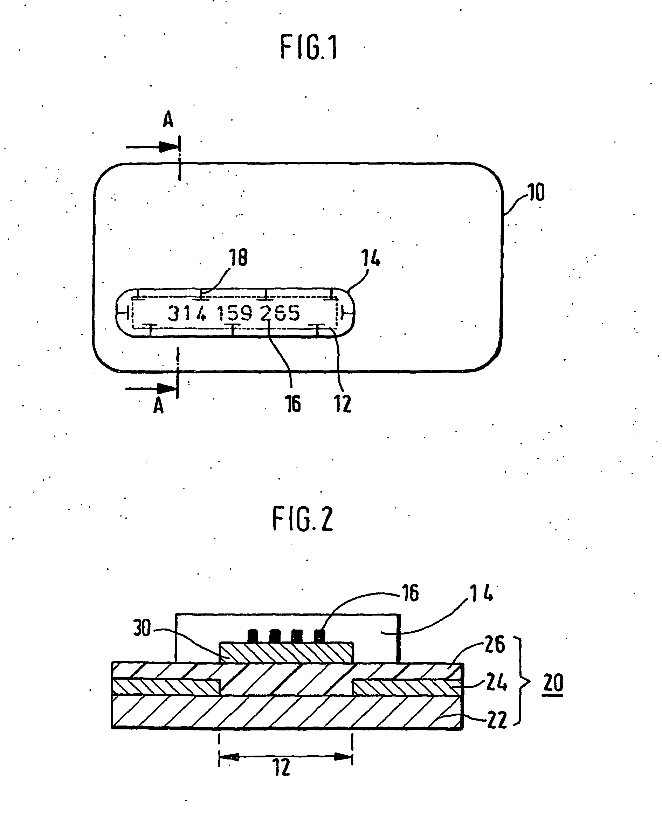

Die Erfindung wird am Beispiel einer vorbezahlten Telefonkarte (Prepaid-Karte) näher erläutert. Figur 1 zeigt eine schematische Darstellung einer Telefonkarte 10 mit einem Ziffernfeld 12 und einem über das Ziffernfeld 12 geklebten Rubbeletikett 14. Auf das Ziffernfeld 12 ist eine Ziffernfolge 16 gedruckt, die bei aufgeklebtem und unversehrten Rubbeletikett 14 für den Betrachter nicht sichtbar ist, und daher in der Darstellung der Fig. 1 strichliert dargestellt ist. Außerhalb des Ziffernfelds 12 kann die Telefonkarte 10 mit einem in der Fig. 1 nicht dargestellten Designdruck, beispielsweise einem Werbeaufdruck, oder mit Anweisungen zur Benutzung der Telefonkarte versehen sein.

Abrubbelbare Schichten des Rubbeletiketts 14 lassen sich durch Abrubbeln mit einem scharfen Gegenstand oder mit dem Fingernagel entfernen, so dass dadurch der Blick auf die darunter liegende Ziffernfolge 16 freigegeben wird. Um ein einfaches Abziehen und Wiederaufkleben des Rubbeletiketts 14 zur verhindern, ist das Rubbeletikett 14 mit einer Reihe von Sicherheitsschlitzen 18 versehen, an denen das Rubbeletikett 14 beim Abziehen reißt. Ein Manipulationsversuch durch Abziehen des Rubbeletiketts 14 wird dadurch deutlich erschwert.

Neben den Sicherheitsschlitzen 18 des Etiketts 14 weist die Telefonkarte 10 zur Erhöhung der Sicherheit gegenüber unbefugten Manipulationen eine unter der aufgedruckten Ziffernfolge 16 angebrachte Zusatzschicht auf, deren Aufbau anhand einiger bevorzugter Ausführungsformen mit Bezug auf die Fig. 2 bis 5 näher erläutert wird. Die Fig. 2 bis 5 zeigen die Telefonkarte 10 im Querschnitt entlang der strichpunktierten Linie A - A der Fig. 1, um den Schichtaufbau der Karte zu veranschäulichen.

Gemäß dem in Fig. 2 dargestellten Ausführungsbeispiel umfasst die Telefonkarte 10 einen Kartenkörper 20 mit einem Kartenträger 22, der aus Papier, Plastik oder einem Mehrschichtsubstrat bestehen kann. Auf den Kastenträger 20 ist im Offset-Verfahren ein Designdruck 24 aufgebracht, der im Bereich der Ziffernfolge 16 eine Aussparung aufweist, die das Ziffernfeld 12 bildet.

Je nach Charakter des Designdrucks 24 und der nachfolgend beschriebene Zusatzschicht kann auf eine derartige Aussparung auch verzichtet werden und der Designdruck 24 durchgängig gestaltet werden. Auf die Designdruckschicht 24 ist ein transparenter UV-Lack 26 als Schutzschicht aufgedruckt. Die LTV-Lackschicht 26 kann im Bereich des Ziffernfelds 12 ebenfalls eine Aussparung aufweisen, um eine bessere Haftung der nachfolgend aufgedruckte Schichten auf dem Untergrund zu gewährleisten.

Auf die UV-Lackschicht 26 ist im Ausführungsbeispiel der Fig. 2 im Offset-Verfahren eine weiße Farbschicht 30 aufgedruckt, deren Ausdehnung der Größe des Ziffernfelds 12 entsprechen kann. Die Ziffernfolge 16 ist mit einem Tintenstrahlverfahren auf die Farbschicht 30 aufgedruckt und das Ziffernfeld 12 und die aufgedruckte Ziffernfolge 16 sind durch das aufgeklebte Rubbeletikett 14 abgedeckt.

Die Adhäsionskraft der Farbschicht 30 zu dem Rubbeletikett 14 ist dabei zumindest in Teilbereichen größer als die Adhäsionskraft der Farbschicht 30 zu dem Kartenkörper 20. Dadurch bleibt bei einem Versuch, das Rubbeletikett 14 etwa mit einem Skalpell abzulösen, zumindest ein Teil der Farbschicht 30 an dem Etikett 14 hängen und löst sich mit diesem ab. Auf dem Ziffernfeld 12 verbleibt dann allenfalls ein Bruchteil der Ziffernfolge 16, der nicht mehr entziffert werden kann. Zugleich verhindert die an dem Rubbeletikett 14 anhaftende weiße Farbschicht 30, dass der zwischen der Farbschicht 30 und dem Etikett 14 eingeschlossene Teil der Ziffernfolge 16 ausgelesen werden kann. Das auf der Telefonkarte 10 gespeicherte Wertguthaben kann somit durch die Manipulation nicht abgerufen werden.

Wird das Rubbeletikett 14 nach dem Ablösen wieder auf den Kartenkörper 20 aufgeklebt, kann dies sowohl seitenrichtig als auch seitenverkehrt erfolgen. Beim nachfolgenden Abrubbeln des Etiketts 14 ergeben sich zwei Möglichkeiten:
(1) Die Ziffernfolge 16 ist noch lesbar. Dies kann der Fall sein, wenn das Etikett 14 seitenrichtig und mit geringem Versatz wieder aufgeklebt wird oder falls beim Ablösen die gesamte Farbschicht 30 an dem Etikett 14 anhaftet. Das Wertguthaben der Telefonkarte 10 kann dann noch verwendet werden. Allerdings ist bei einer Separation der Ziffernfolge 16 in zwei Teile ein exaktes, registerhaltiges Aufkleben auf die auf dem Kartenkörper 20 verbliebenen Informationsbruchteile nicht möglich, so dass die Manipulation nach dem Aufrubbeln sichtbar wird und gegebenenfalls reklamiert werden kann.
(2) Die Ziffernfolge 16 ist nicht mehr lesbar. Dies kann der Fall sein, wenn das Etikett 14 seitenverkehrt oder mit großem Versatz aufgeklebt wird. Die unleserliche Information belegt zum einen die Manipulation und zum anderen die Tatsache, dass der Besitzer das Wertguthaben nicht verbrauchen konnte. Eine Reklamation oder ein Umtausch der Telefonkarte ist daher möglich.

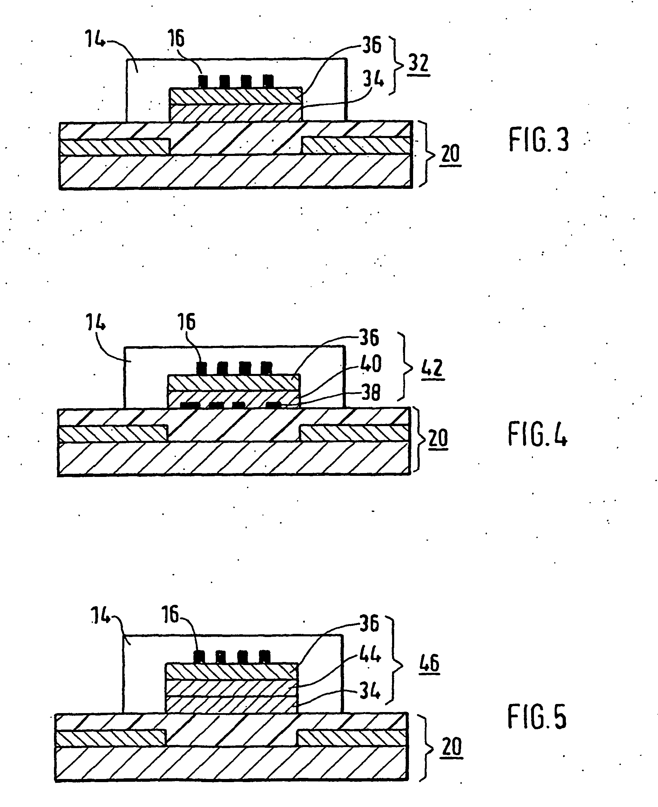

Das Ausführungsbeispiel der Fig. 3 unterscheidet sich von dem Ausführungsbeispiel der Fig. 2 nur in der Gestaltung der Zusatzschicht, während der Kartenkörper 20, die Ziffernfolge 16 und das Rubbeletikett 14 wie oben beschrieben ausgebildet sind. Gemäß Fig. 3 ist zwischen der Ziffernfolge 16 und dem Kartenkörper 20 eine Zusatzschicht 32 angeordnet, die aus einer auf dem Kartenkörper 20 aufgedruckten Lackschicht 34, beispielsweise einer UV-Lackschicht, und einer auf der Lackschicht aufgedruckten Farbschicht 36 besteht.

Durch die Lackschicht 34 kann die Adhäsionskraft der Zusatzschicht 32 zu dem Kartenkörper 20 genau eingestellt werden, so dass die Adhäsionskraft der Zusatzschicht 32 zu dem Rubbeletikett 14 zumindest in Teilbereichen größer ist als die Adhäsionskraft der Zusatzschicht 32 zu dem Kartenkörper 20. Die Farbschicht 36 dient einerseits als Untergrund für die Ziffernfolge 16 und verhindert anderseits, dass der zusammen mit dem Rubbeletikett 14 abgelöste Teil der Ziffernfolge 16 gelesen werden kann. Der zweischichtige Aufbau der Zusatzschicht 32 erlaubt eine präzise Einstellung der Haftungseigenschaften zwischen Zusatzschicht 32 und Kartenkörper 20 bei gleichzeitiger Optimierung der Farbschicht 36 auf Darstellungskontrast und Lichtundurchlässigkeit.

Bei dem Ausführungsbeispiel der Fig. 4 ist auf den Kartenkörper 20 stellenweise ein Antihaftlack 38 aufgebracht, um an diesen Stellen die Adhäsionskraft der Zusatzschicht 42 gezielt zu verringern. Über dem Antihaftlack 38 ist ein Haftvermittler 40 aufgedruckt, der die Zusatzschicht 42 an den nicht mit Antihaftlack 38 versehenen Stellen fest mit dem Kartenkörper 20 verbindet. Es entstehen in der Zusatzschicht 42 somit zwei Bereiche unterschiedlicher Adhäsionskraft zu dem Kartenkörper 20, die beim Ablösen des Etiketts 14 separiert werden.

Die ersten Bereiche der Zusatzschicht 42 über den mit Antihaftlack 38 versehenen Stellen werden beim Ablösen des Etiketts 14 zusammen mit dem darauf angeordneten Teil der Ziffernfolge 16 abgehoben. Die zweiten Bereiche an den anderen Stellen verbleiben auf dem Kartenkörper 20. Größe und Gestalt der ersten und zweiten Bereiche sind auf die abzusichernden Informationen, im vorliegenden Fall auf Ziffernfolgen, abgestimmt, um sicherzustellen, dass die auf dem Kartenkörper verbleibenden Informationsteile nicht mehr entzifferbar sind. Beispielsweise kann der Antihaftlack in Form nahe benachbarter, unregelmäßig geformter Kurvenstücke aufgedruckt sein.

Ein weiteres Ausführungsbeispiel der Erfindung ist in der Fig. 5 dargestellt. Bei dieser Gestaltung weist die Zusatzschicht 46 neben der ersten, unter der Ziffernfolge 16 liegenden Farbschicht 36 und der auf den Kartenkörper 20 aufgedruckten Lackschicht 34 zur Einstellung der Haftungseigenschaften eine zwischen der ersten Farbschicht 36 und der Lackschicht 34 angeordnete zweite Farbschicht 44 auf. Während die Farbe der ersten Farbschicht 36 zur Erzielung einer guten Lesbarkeit der Ziffernfolge 16 gewählt ist, trägt die zweite Farbschicht 44 dazu bei, dass der an dem Etikett 14 nach dem Ablösen anhaftende Teil der Ziffernfolge unlesbar bleibt. Die zweite Farbschicht 44 weist dazu im Ausführungsbeispiel ein unregelmäßiges Wellenmuster kleinräumiger Struktur auf. Sie kann auch mit einer Blindinformation in Form einer ungültigen Ziffernfolge versehen sein, um einen Manipulator über den Erfolg seines Eingriffs zu täuschen. Es versteht sich, dass die beiden Farbschichten 44, 36 der Fig. 5 auch mit der Antihaftlack/Haftvermittler-Struktur der Fig. 4 kombiniert werden können.

## Patentansprüche

1. Anordnung (10) mit abzusichernden Informationen (16), wie einer Codierung, Kennung, PIN-Nummer oder dergleichen, umfassend:
- einen Gegenstand (20), auf dem die abzusichernden Informationen (16) aufgebracht sind,
- einen Sicherheits-Abdeckaufkleber (14), der die abzusichernden Informationen (16) abdeckt, und
- eine zwischen dem Gegenstand (20) und den abzusichernden Informationen (16) angeordnete Zusatzschicht (30, 32, 42, 46), die eine direkt auf dem Gegenstand (20) angeordnete Farb- oder Lackschicht (30, 34, 40) umfasst,
**dadurch gekennzeichnet, dass** der Sicherheits-Abdeckaufkleber (14) eine gegenüber dem Gegenstand (20) kleinere Grundfläche besitzt und dass die Adhäsionskraft der Zusatzschicht (30, 32, 42, 46) zu dem Abdeckaufkleber (14) zumindest in Teilbereichen größer ist, als die Adhäsionskraft der Zusatzschicht (30, 32, 42, 46) zu dem Gegenstand (20).

2. Anordnung (10) nach Anspruch 1, **dadurch gekennzeichnet, dass** die abzusichernden Informationen (16) durch ein Tintenstrahlverfahren auf die Zusatzschicht (30, 32, 42, 46) aufgedruckt sind.

3. Anordnung (10) nach Anspruch 1 oder 2, **dadurch gekennzeichnet, dass** die abzusichernden Informationen (16) in schwarzer Farbe auf die Zusatzschicht (30, 32, 42, 46) aufgebracht sind.

4. Anordnung (10) nach einem der Ansprüche 1 bis 3, **dadurch gekennzeichnet, dass** die Zusatzschicht durch eine Farbschicht (30) gebildet ist.

5. Anordnung (10) nach einem der Ansprüche 1 bis 3, **dadurch gekennzeichnet, dass** die Zusatzschicht durch eine Mehrlagenschicht (32, 42, 46) gebildet ist und zumindest eine obere Farbschicht (36) und zumindest eine zwischen dem Gegenstand (20) und der oberen Farbschicht (36) angeordnete Lackschicht (34) als die Farb- oder Lackschicht umfasst.

6. Anordnung (10) nach Anspruch 5, **dadurch gekennzeichnet, dass** die Lackschicht durch einen UV-Lack (34) gebildet ist.

7. Anordnung (10) nach einem der Ansprüche 4 bis 6, **dadurch gekennzeichnet, dass** die unter den abzusichernden Informationen (16) liegende Farbschicht (30, 36) durch eine einfarbige Farbschicht, bevorzugt eine weiße Farbschicht, gebildet ist.

8. Anordnung (10) nach einem der Ansprüche 4 bis 7, **dadurch gekennzeichnet, dass** die Farbe der unter den abzusichernden Informationen (16) liegenden Farbschicht (30, 36) auf die Farbe der abzusichernden Informationen (16) abgestimmt ist, um einen hohen Kontrast zwischen den abzusichernden Informationen (16) und der darunter liegenden Farbschicht (30, 36) herzustellen.

9. Anordnung (10) nach einem der Ansprüche 5 bis 8, **dadurch gekennzeichnet, dass** die Mehrlagenschicht (46) eine zweite Farbschicht (44) umfasst, die zwischen der Lackschicht (34) und der unter den abzusichernden Informationen (16) liegenden oberen Farbschicht (36) angeordnet ist.

10. Anordnung (10) nach Anspruch 9, **dadurch gekennzeichnet, dass** die zweite Farbschicht (44) ein unregelmäßiges Muster aufweist.

11. Anordnung (10) nach Anspruch 9 oder 10, **dadurch gekennzeichnet, dass** die zweite Farbschicht (44) Blindinformationen enthält, deren Charakter den abzusichernden Informationen (16) entspricht.

12. Anordnung (10) nach einem der Ansprüche 1 bis 11, **dadurch gekennzeichnet, dass** die Adhäsionskraft der Zusatzschicht (30, 32, 42, 46) zu dem Abdeckaufkleber (14) größer ist als die Adhäsionskraft der Zusatzschicht (30, 32, 42, 46) zu dem Gegenstand (20).

13. Anordnung (10) nach einem der Ansprüche 1 bis 11, **dadurch gekennzeichnet, dass** in ersten Bereichen die Adhäsionskraft der Zusatzschicht (30, 32, 42, 46) zu dem Abdeckaufkleber (14) größer ist als die Adhäsionskraft der Zusatzschicht zu dem Gegenstand (20), und dass in zweiten Bereichen die Adhäsionskraft der Zusatzschicht (30, 32, 42, 46) zu dem Abdeckaufkleber (14) kleiner ist als die Adhäsionskraft der Zusatzschicht (30, 32, 42, 46) zu dem Gegenstand (20).

14. Anordnung (10) nach Anspruch 13, **dadurch gekennzeichnet, dass** die ersten und zweiten Bereiche eine kleinräumige Struktur bilden.

15. Anordnung (10) nach Anspruch 13 oder 14, **dadurch gekennzeichnet, dass** die ersten und zweiten Bereiche eine unregelmäßige Struktur bilden.

16. Anordnung (10) nach einem der Ansprüche 13 bis 15, **dadurch gekennzeichnet, dass** Größe und Gestalt der ersten und zweiten Bereiche derart auf die abzusichernden Informationen (16) abgestimmt sind, dass diese nach Abheben des Abdeckaufklebers (14) nicht mehr entzifferbar sind.

17. Anordnung (10) nach einem der Ansprüche 13 bis 16, **dadurch gekennzeichnet, dass** die Zusatzschicht (42) Mittel (38, 40) zur örtlich unterschiedlichen Einstellung der Adhäsionskraft aufweist.

18. Anordnung (10) nach Anspruch 17, **dadurch gekennzeichnet, dass** die Mittel zur örtlich unterschiedlichen Einstellung der Adhäsionskraft einen zwischen den abzusichernden Informationen (16) und dem Gegenstand (20) lokal auf den Gegenstand (20) aufgebrachten Antihaftlack (38) umfassen.

19. Anordnung (10) nach Anspruch 17 oder 18, **dadurch gekennzeichnet, dass** die Mittel zur örtlich unterschiedlichen Einstellung der Adhäsionskraft einen zwischen den abzusichernden Informationen und dem Gegenstand (20) lokal auf den Gegenstand (20) aufgebrachten Haftvermittler (40) umfassen.

20. Anordnung (10) nach einem der Ansprüche 17 bis 19, **dadurch gekennzeichnet, dass** die Mittel (38, 40) zur örtlich unterschiedlichen Einstellung der Adhäsionskraft durch Drucken auf den Gegenstand (20) aufgebracht sind.

21. Anordnung (10) nach einem der Ansprüche 1 bis 20, **dadurch gekennzeichnet, dass** die Zusatzschicht (30, 32, 42, 46) auf den Gegenstand (20) aufgedruckt ist.

22. Anordnung (10) nach Anspruch 21, **dadurch gekennzeichnet, dass** die Zusatzschicht (30, 32, 42, 46) im Offset-Verfahren auf den Gegenstand (20) aufgedruckt ist.

23. Anordnung (10) nach wenigstens einem der Ansprüche 1 bis 22, **dadurch gekennzeichnet, dass** die abzusichernden Informationen (16) eine Zeichenfolge, insbesondere eine Geheimzahl oder eine PIN-Nummer, darstellen.

24. Anordnung (10) nach einem der Ansprüche 1 bis 23, **dadurch gekennzeichnet, dass** die Anordnung (10) ein Wertdokument, insbesondere eine Bankkarte, eine Kreditkarte, eine vorbezahlte Wertkarte, wie eine Telefonkarte, oder ein Lotterielos, darstellt.

25. Anordnung (10) nach einem der Ansprüche 1 bis 24, **dadurch gekennzeichnet, dass** der Abdeckaufkleber ein Klebeetikett, insbesondere ein Rubbeletikett (14), darstellt

26. Anordnung (10) nach einem der Ansprüche 1 bis 25, **dadurch gekennzeichnet, dass** die Zusatzschicht (30, 32, 42, 46) auf dem Gegenstand (20) in der Größe eines Informationsfeldes (12), welches die zu sichernden Informationen (16) umfaßt, ausgebildet ist

27. Anordnung (10) nach einem der Ansprüche 1 bis 26, **dadurch gekennzeichnet, dass** der Abdeckaufkleber (14) eine größere Grundfläche als die Zusatzschicht aufweist.

28. Verfahren zum Herstellen einer Anordnung (10) mit abzusichernden Informationen (16), wie einer Codierung, Kennung, PIN-Nummer oder dergleichen, **gekennzeichnet durch** folgende Schritte:
a) Bereitstellen eines mit den Informationen zu versehenden Gegenstands (20),
b) Aufbringen einer Zusatzschicht (30,32,42,46) auf den Gegenstand (20) mit einer ersten, gleichmäßigen oder lokal unterschiedlichen Adhäsionskraft zu dem Gegenstand (20), wobei die Zusatzschicht eine direkt auf dem Gegenstand (20) angeordnete Farb- oder Lackschicht (30, 34, 40) umfaßt,
c) Aufbringen der zu sichernden Informationen (16) auf die Zusatzschicht (30, 32, 42, 46) und
d) Abdecken der zu sichernden Informationen (16) mit einem Sicherheits-Abdeckaufkleber (14) mit einer gegenüber dem Gegenstand (20) kleineren Grundfläche und einer zweiten Adhäsionskraft zu der Zusatzschicht (30, 32, 42, 46), wobei die zweite Adhäsionskraft zumindest in Teilbereichen größer ist als die erste Adhäsionskraft der Zusatzschicht (30, 32, 42, 46) zu dem Gegenstand (20).

29. Verfahren nach Anspruch 28, **dadurch gekennzeichnet, dass** in Schritt b) als Zusatzschicht eine Farbschicht aufgebracht wird.

30. Verfahren nach Anspruch 28, **dadurch gekennzeichnet, dass** in Schritt b)
b1) als die Farb- oder Lackschicht eine Lackschicht auf den Gegenstand aufgebracht wird, welche die Adhäsionskraft der Zusatzschicht zu dem Gegenstand einstellt, und
b2) eine Farbschicht auf die Lackschicht aufgebracht wird.

31. Verfahren nach Anspruch 30, **dadurch gekennzeichnet, dass** in einem Schritt
b3) eine weitere Farbschicht mit einer anderen Farbe und/ oder einem anderen Muster auf die vorhandene Farbschicht aufgebracht wird.

32. Verfahren nach einem der Ansprüche 28 bis 31, **dadurch gekennzeichnet, dass** in Schritt b) Mittel zur örtlich unterschiedlichen Einstellung der Adhäsionskraft auf den Gegenstand aufgebracht werden, insbesondere dass ein Antihaftlack und/oder ein Haftvermittler lokal auf den Gegenstand aufgebracht wird.

33. Verfahren nach einem der Ansprüche 28 bis 32, **dadurch gekennzeichnet, dass** die in Schritt b) aufgebrachten Schichten aufgedruckt werden, bevorzugt im Offset-Verfahren aufgedruckt werden.

34. Verfahren nach einem der Ansprüche 28 bis 33, **dadurch gekennzeichnet, dass** die abzusichernden Informationen in Schritt c) durch ein Tintenstrahlverfahren auf die Zusatzschicht aufgedruckt werden.

35. Verfahren nach einem der Ansprüche 28 bis 34, **dadurch gekennzeichnet, dass** die Zusatzschicht auf dem Gegenstand in der Größe eines Informationsfeldes, welches die zu sichernden Informationen umfaßt, aufgebracht wird.

36. Verfahren nach einem der Ansprüche 28 bis 35, **dadurch gekennzeichnet, dass** der Abdeckaufkleber so gewählt ist , daß er eine größere Grundfläche als die Zusatzschicht aufweist

## Claims

1. An assembly (10) having information (16) to be secured, such as a coding, identification, PIN number or the like, comprising
- an object (20) on which the information (16) to be secured is provided,
- a security cover sticker (14) covering the information (16) to be secured, and
- an additional layer (30, 32, 42, 46) disposed between the object (20) and the information (16) to be secured and comprising an ink layer or lacquer layer (30, 34, 40) disposed directly on the object (20),
**characterized in that** the security cover sticker (14) has a base area smaller than the object (20), and the adhesive power of the additional layer (30, 32, 42, 46) to the cover sticker (14) is greater at least in partial areas than the adhesive power of the additional layer (30, 32, 42, 46) to the object (20).

2. The assembly (10) according to claim 1, **characterized in that** the information (16) to be secured is printed on the additional layer (30, 32, 42, 46) by an ink jet process.

3. The assembly (10) according to claim 1 or 2, **characterized in that** the information (16) to be secured is applied to the additional layer (30, 32, 42, 46) in black.

4. The assembly (10) according to any of claims 1 to 3, **characterized in that** the additional layer is formed by an ink layer (30).

5. The assembly (10) according to any of claims 1 to 3, **characterized in that** the additional layer is formed by a multi-ply layer (32, 42, 46) and comprises at least one upper ink layer (36) and at least one lacquer layer (34) disposed between the object (20) and the upper ink layer (36) as the ink layer or lacquer layer.

6. The assembly (10) according to claim 5, **characterized in that** the lacquer layer is formed by a UV lacquer (34).

7. The assembly (10) according to any of claims 4 to 6, **characterized in that** the ink layer (30, 36) located under the information (16) to be secured is formed by a monochrome ink layer, preferably a white ink layer.

8. The assembly (10) according to any of claims 4 to 7, **characterized in that** the color of the ink layer (30, 36) located under the information (16) to be secured is coordinated with the color of the information (16) to be secured to produce high contrast between the information (16) to be secured and the ink layer (30, 36) located thereunder.

9. The assembly (10) according to any of claims 5 to 8, **characterized in that** the multi-ply layer (46) comprises a second ink layer (44) disposed between the lacquer layer (34) and the upper ink layer (36) located under the information (16) to be secured.

10. The assembly (10) according to claim 9, **characterized in that** the second ink layer (44) has an irregular pattern.

11. The assembly (10) according to claim 9 or 10, **characterized in that** the second ink layer (44) contains blind information whose character corresponds to the information (16) to be secured.

12. The assembly (10) according to any of claims 1 to 11, **characterized in that** the adhesive power of the additional layer (30, 32, 42, 46) to the cover sticker (14) is greater than the adhesive power of the additional layer (30, 32, 42, 46) to the object (20).

13. The assembly (10) according to any of claims 1 to 11, **characterized in that** the adhesive power of the additional layer (30, 32, 42, 46) to the cover sticker (14) is greater than the adhesive power of the additional layer to the object (20) in first areas, and the adhesive power of the additional layer (30, 32, 42, 46) to the cover sticker (14) is smaller than the adhesive power of the additional layer (30, 32, 42, 46) to the object (20) in second areas.

14. The assembly (10) according to claim 13, **characterized in that** the first and second areas form a fine-scale structure.

15. The assembly (10) according to claim 13 or 14, **characterized in that** the first and second areas form an irregular structure.

16. The assembly (10) according to any of claims 13 to 15, **characterized in that** the size and shape of the first and second areas are coordinated with the information (16) to be secured such that it is no longer decipherable after removal of the cover sticker (14).

17. The assembly (10) according to any of claims 13 to 16, **characterized in that** the additional layer (42) has means (38, 40) for locally different adjustment of adhesive power.

18. The assembly (10) according to claim 17, **characterized in that** the means for locally different adjustment of adhesive power comprise a non-stick lacquer (38) applied to the object (20) locally between the information (16) to be secured and the object (20).

19. The assembly (10) according to claim 17 or 18, **characterized in that** the means for locally different adjustment of adhesive power comprise an adhesion promoter (40) applied to the object (20) locally between the information to be secured and the object (20).

20. The assembly (10) according to any of claims 17 to 19, **characterized in that** the means (38, 40) for locally different adjustment of adhesive power are applied to the object (20) by printing.

21. The assembly (10) according to any of claims 1 to 20, **characterized in that** the additional layer (30, 32, 42, 46) is printed on the object (20).

22. The assembly (10) according to claim 21, **characterized in that** the additional layer (30, 32, 42, 46) is printed on the object (20) by the offset process.

23. The assembly (10) according to any of claims 1 to 22, **characterized in that** the information (16) to be secured is a character string, in particular a secret number or PIN number.

24. The assembly (10) according to any of claims 1 to 23, **characterized in that** the assembly (10) is a value document, in particular a bank card, credit card, prepaid stored-value card such as a phonecard, or lottery ticket.

25. The assembly (10) according to any of claims 1 to 24, **characterized in that** the cover sticker is an adhesive label, in particular a scratch label (14).

26. The assembly (10) according to any of claims 1 to 25, **characterized in that** the additional layer (30, 32, 42, 46) is formed on the object (20) in the size of an information field (12) comprising the information (16) to be secured.

27. The assembly (10) according to any of claims 1 to 26, **characterized in that** the cover sticker (14) has a greater base area than the additional layer.

28. A method for producing an assembly (10) with information (16) to be secured, such as a coding, identification, PIN number or the like, **characterized by** the following steps:
a) supplying an object (20) to be provided with the information,
b) applying an additional layer (30, 32, 42, 46) to the object (20) with a first, uniform or locally different adhesive power to the object (20), the additional layer comprising an ink layer or lacquer layer (30, 34, 40) disposed directly on the object (20),
c) applying the information (16) to be secured to the additional layer (30, 32, 42, 46), and
d) covering the information (16) to be secured with a security cover sticker (14) having a smaller base area than the object (20) and a second adhesive power to the additional layer (30, 32, 42, 46), the second adhesive power being greater at least in partial areas than the first adhesive power of the additional layer (30, 32, 42, 46) to the object (20).

29. The method according to claim 28, **characterized in that** an ink layer is applied as the additional layer in step b).

30. The method according to claim 28, **characterized in that** in step b)
b1) a lacquer layer which adjusts the adhesive power of the additional layer to the object is applied to the object as the ink layer or lacquer layer, and
b2) an ink layer is applied to the lacquer layer.

31. The method according to claim 30, **characterized in that** in a step
b3) a further ink layer with another color and/or another pattern is applied to the ink layer present.

32. The method according to any of claims 28 to 31, **characterized in that** in step b) means for locally different adjustment of adhesive power are applied to the object, in particular a non-stick lacquer and/or an adhesion promoter is applied locally to the object.

33. The method according to any of claims 28 to 32, **characterized in that** the layers applied in step b) are printed on, preferably printed by the offset process.

34. The method according to any of claims 28 to 33, **characterized in that** the information to be secured is printed on the additional layer by an ink jet process in step c).

35. The method according to any of claims 28 to 34, **characterized in that** the additional layer is applied to the object in the size of an information field comprising the information to be secured.

36. The method according to any of claims 28 to 35, **characterized in that** the cover sticker is selected so as to have a greater base area than the additional layer.

## Revendications

1. Disposition (10) avec informations à sécuriser (16) telles que codage, identificateur, numéro d'identification personnel ou information similaire, comprenant:
■ un objet (20) sur lequel les informations à sécuriser (16) sont appliquées,
■ un cache autocollant de sécurité (14) qui recouvre les informations (16) à sécuriser, et
■ une couche supplémentaire (30, 32, 42, 46) disposée entre l'objet (20) et les informations à sécuriser (16) et comprenant une couche d'encre ou de vernis (30, 34, 40) directement disposée sur l'objet (20),
**caractérisée en ce que** le cache autocollant de sécurité (14) possède une surface de base plus petite que celle de l'objet (20) et **en ce que** la force d'adhérence de la couche supplémentaire (30, 32, 42, 46) vis-à-vis du cache autocollant (14) est supérieure au moins dans certaines zones à la force d'adhérence de la couche supplémentaire (30, 32, 42, 46) vis-à-vis de l'objet (20).

2. Disposition (10) selon la revendication 1, **caractérisée en ce que** les informations à sécuriser (16) sont imprimées sur la couche supplémentaire (30, 32, 42, 46) par un processus d'impression jet d'encre.

3. Disposition (10) selon la revendication 1 ou 2, **caractérisée en ce que** les informations à sécuriser (16) sont imprimées en couleur noire sur la couche supplémentaire (30, 32, 42, 46).

4. Disposition (10) selon une des revendications de 1 à 3, **caractérisée en ce que** la couche supplémentaire est constituée par une couche d'encre (30).

5. Disposition (10) selon une des revendications de 1 à 3, **caractérisée en ce que** la couche supplémentaire est constituée par une couche multiple (32, 42, 46) et comprend au moins une couche supérieure d'encre (36) et au moins une couche de vernis (34) disposée entre l'objet (20) et la couche supérieure d'encre (36) en tant que la couche d'encre ou de vernis.

6. Disposition (10) selon la revendication 5, **caractérisée en ce que** la couche de vernis est constituée par un vernis UV (34).

7. Disposition (10) selon une des revendications de 4 à 6, **caractérisée en ce que** la couche d'encre (30, 36) se trouvant sous les informations à sécuriser (16) est constituée par une couche d'encre monochrome, de préférence une couche d'encre blanche.

8. Disposition (10) selon une des revendications de 4 à 7, **caractérisée en ce que** la couleur de la couche d'encre (30, 36) se trouvant sous les informations à sécuriser (16) est choisie en fonction de la couleur des informations à sécuriser (16) afin de générer un contraste accusé entre les informations à sécuriser (16) et la couche d'encre (30, 36) se trouvant dessous.

9. Disposition (10) selon une des revendications de 5 à 8, **caractérisée en ce que** la couche multiple (46) comprend une deuxième couche d'encre (44) disposée entre la couche placée en tant que couche de vernis (34) et la couche supérieure d'encre (36) se trouvant sous les informations à sécuriser (16).

10. Disposition (10) selon la revendication 9, **caractérisée en ce que** la deuxième couche d'encre (44) présente un motif irrégulier.

11. Disposition (10) selon la revendication 9 ou 10, **caractérisée en ce que** la deuxième couche d'encre (44) comporte des informations cachées dont le caractère correspond aux informations à sécuriser (16).

12. Disposition (10) selon une des revendications de 1 à 11, **caractérisée en ce que** la force d'adhérence de la couche supplémentaire (30, 32, 42, 46) vis-à-vis du cache autocollant (14) est supérieure à la force d'adhérence de la couche supplémentaire (30, 32, 42, 46) vis-à-vis de l'objet (20).

13. Disposition (10) selon une des revendications de 1 à 11, **caractérisée en ce que**, dans des premières zones, la force d'adhérence de la couche supplémentaire (30, 32, 42, 46) vis-à-vis du cache autocollant (14) est supérieure à la force d'adhérence de la couche supplémentaire vis-à-vis de l'objet (20), et **en ce que**, dans des deuxièmes zones, la force d'adhérence de la couche supplémentaire (30, 32, 42, 46) vis-à-vis du cache autocollant (14) est inférieure à la force d'adhérence de la couche supplémentaire (30, 32, 42, 46) vis-à-vis de l'objet (20).

14. Disposition (10) selon la revendication 13, **caractérisée en ce que** les premières et deuxièmes zones constituent une structure étroite.

15. Disposition (10) selon la revendication 13 ou 14, **caractérisée en ce que** les premières et deuxièmes zones constituent une structure irrégulière.

16. Disposition (10) selon une des revendications de 13 à 15, **caractérisée en ce que** la taille et la forme des premières et deuxièmes zones sont réalisées de telle manière en fonction des informations à sécuriser (16) que ces dernières ne sont plus déchiffrables une fois que le cache autocollant (14) a été soulevé.

17. Disposition (10) selon une des revendications de 13 à 16, **caractérisée en ce que** la couche supplémentaire (42) comporte es moyens (38, 40) destinés à régler la force d'adhérence différemment selon les endroits.

18. Disposition (10) selon la revendication 17, **caractérisée en ce que** les moyens destinés à régler la force d'adhérence différemment selon les endroits comprennent un vernis anti-adhérent (38) appliqué localement sur l'objet (20) entre les informations à sécuriser (16) et l'objet (20).

19. Disposition (10) selon la revendication 17 ou 18, **caractérisée en ce que** les moyens destinés à régler la force d'adhérence différemment selon les endroits comprennent un agent adhésif (40) appliqué localement sur l'objet (20) entre les informations à sécuriser et l'objet (20).

20. Disposition (10) selon une des revendications de 17 à 19, **caractérisée en ce que** les moyens (38, 40) destinés à régler la force d'adhérence différemment selon les endroits) sont appliqués sur l'objet (20) par impression.

21. Disposition (10) selon une des revendications de 1 à 20, **caractérisée en ce que** la couche supplémentaire (30, 32, 42, 46) est imprimée sur l'objet (20).

22. Disposition (10) selon la revendication 21, **caractérisée en ce que** la couche supplémentaire (30, 32, 42, 46) est imprimée sur l'objet (20) par procédé offset.

23. Disposition (10) selon au moins une des revendications de 1 à 22, **caractérisée en ce que** les informations à sécuriser (16) représentent une chaîne de caractères, notamment un numéro secret ou un numéro d'identification personnel.

24. Disposition (10) selon une des revendications de 1 à 23, **caractérisée en ce que** la disposition (10) représente un document de valeur, notamment une carte bancaire, une carte de crédit, une carte de valeur prépayée, comme une carte de téléphone ou un billet de loterie.

25. Disposition (10) selon une des revendications de 1 à 24, **caractérisée en ce que** le cache autocollant représente une étiquette adhésive, notamment une étiquette à gratter (14).

26. Disposition (10) selon une des revendications de 1 à 25, **caractérisée en ce que** la couche supplémentaire (30, 32, 42, 46) est réalisée sur l'objet (20) en y ayant la taille d'un champ d'information (12), ce dernier comprenant les informations à sécuriser (16).

27. Disposition (10) selon une des revendications de 1 à 26, **caractérisée en ce que** le cache autocollant (14) présente une surface de base plus grande que la couche supplémentaire.

28. Procédé de production d'une disposition (10) avec informations à sécuriser (16) telles que codage, identificateur, numéro d'identification personnel ou information similaire, **caractérisé par** les étapes suivantes :
a) mise à disposition d'un objet (20) devant être pourvu des informations,
b) application d'une couche supplémentaire (30, 32, 42, 46) sur l'objet (20), avec une première force d'adhérence vis-à-vis de l'objet (20) régulière ou différente selon les endroits, la couche supplémentaire comprenant une couche d'encre ou de vernis (30, 34, 40) disposée directement sur l'objet (20),
c) application des informations à sécuriser (16) sur la couche supplémentaire (30, 32, 42, 46) et
d) recouvrement des informations à sécuriser (16) avec un cache autocollant de sécurité (14) présentant une surface de base plus petite que celle de l'objet (20) et une deuxième force d'adhérence vis-à-vis de la couche supplémentaire (30, 32, 42, 46), la deuxième force d'adhérence étant supérieure au moins dans certaines zones à la première force d'adhérence de la couche supplémentaire (30, 32, 42, 46) vis-à-vis de l'objet (20).

29. Procédé selon la revendication 28, **caractérisé en ce qu'**une couche d'encre est appliquée en tant que couche supplémentaire lors de l'étape b).

30. Procédé selon la revendication 28, **caractérisé en ce que**, lors de l'étape b),
b1) une couche de vernis réglant la force d'adhérence de la couche supplémentaire vis-à-vis de l'objet est appliquée sur l'objet en tant que la couche d'encre ou de vernis, et
b2) une couche d'encre est appliquée sur la couche de vernis.

31. Procédé selon la revendication 30, **caractérisé en ce que**, lors d'une étape
b3) une autre couche présentant une autre couleur et/ou un autre motif est appliquée sur la couche d'encre déjà existante.

32. Procédé selon une des revendications de 28 à 31, **caractérisé en ce que**, lors de l'étape b), des moyens destinés à régler la force d'adhérence différemment selon les endroits sont appliqués sur l'objet, notamment **en ce qu'**un vernis anti-adhérent et / ou un agent adhésif est appliqué localement sur l'objet.

33. Procédé selon une des revendications de 28 à 32, **caractérisé en ce que** les couches appliquées lors de l'étape b) sont imprimées, sont imprimées de préférence par procédé offset.

34. Procédé selon une des revendications de 28 à 33, **caractérisé en ce que** les informations à sécuriser (16) sont imprimées sur la couche supplémentaire par un processus d'impression jet d'encre lors de l'étape c).

35. Procédé selon une des revendications de 28 à 34, **caractérisé en ce que** la couche supplémentaire est appliquée sur l'objet en y ayant la taille d'un champ d'information (12), ce dernier comprenant les informations à sécuriser (16).

36. Procédé selon une des revendications de 28 à 35, **caractérisé en ce que** le cache autocollant présente une surface de base plus grande que la couche supplémentaire.
